# EUROPEAN PATENT APPLICATION

(11) **EP 2 365 590 A2**
(43) Date of publication of application: **14.09.2011**
(21) Application number: 10162540.8
(22) Date of filing: 11.05.2010
(51) Int. Cl.: H01R 13/60, H01R 13/72, H01R 27/02

(54) **Detachable electrical power receptacle**

(30) Priority: 08.03.2010 TW 099106592
(71) Applicant: Powertech Industrial Co., Ltd., Taipei Hsien Chung Ho City (CN)
(72) Inventor: Lee, Yu-Lung, 353, Nanfu Village (TW); Kuo, Ming-Chou, 112, Taipei City (TW)
(74) Representative: Ihle, Kornelia

(57) **Abstract**

Disclosed is a detachable electrical power receptacle, comprising: a main body; an extension socket for receiving and supplying an electrical power; and an extension power cord, being connecting between the extension socket and the main body. The detachable electrical power receptacle of the present invention includes a coil reel for winding the extension power cord. Whereby, the length of the extension power cord is adjustable so as to control the extension socket to be disengaged from the main body in an exposed mode or engaged to the main body in a concealed mode, so that the inconvenience by applying additional charging connectors and the extension power cords thereof to charge electronic devices may be reduced.

## Description

### BACKGROUND OF THE INVENTION

### 1. Field of the Invention

The present invention relates to a charging device, in particular, to an electrical power receptacle which has a certain detachable portion for supplying electrical power.

### 2. Description of Related Art

Because the present continuous development of modern society in USB (Universal Serial Bus) powered applications is applied broadly, a conventional power supply apparatus is designed to not only have two-slot or three-slot electrical outlets but also integrate with USB jacks. A method for supplying electrical power to portable electronic devices is to plug USB connectors into the USB jacks designed on the power supply apparatus for receiving the electrical power.

Generally speaking, the above-mentioned portable electronic devices utilize the external Universal Serial Bus (USB) connectors and the corresponding extension power cords thereof so as to connect to the power supply apparatus electrically. Therefore, whenever users would like to apply the electrical power on the portable electronic devices thru the public electrical power distribution system in different locations, the appropriate charging tools (USB connectors and the corresponding extension power cords) are also required to be brought along with the users under different circumstances and locations. Moreover, while the users would like to charge the portable electronic devices, it requires to perform additional actions, such as, bending to the ground, to plug the USB connectors into the power supply apparatus for retrieving the electrical power; while the users would like to uncharge the portable electronic devices, the users are required to bend to the ground again to unplug the USB connectors and collect the extension power cords and the USB connectors for usage next time. As a result, it clearly shows that the additional actions to charge or uncharge the portable electronic devices cause inconvenience for the users in application.

### SUMMARY OF THE INVENTION

In view of the aforementioned issues, a primary objective of the present invention is to provide a detachable electrical power receptacle in accordance with the structural design thereof for solving the inconvenience in use. The detachable electrical power receptacle incorporates with the utilization of extension power cord, so that the inconvenience in using the additional charging connectors and the appropriate extension power cords may be reduced when the portable electronic devices are in a charging state.

To solve the aforementioned issues, an embodiment of a detachable electrical power receptacle according to the present invention, comprises: a main body, having an electrical power plug for connecting a power supply source; an extension socket, connected to a power connector for supplying the electrical power; and an extension power cord, connected to the extension socket. The detachable electrical power receptacle of the present invention includes a coil reel for winding the extension power cord. Wherein, the length of the extension power cord is adjustable so as to control the extension socket to be disengaged from the main body in an exposed mode or engaged to the main body in a concealed mode. When the users are using the detachable electrical power receptacle, it is not necessary to bring additional power connectors or power cords separately and perform extra actions, thereby reducing the inconvenience in charging the portable electronic devices for the users.

Consequently, the detachable electrical power receptacle of the present invention utilizes the technical feature of shortening the length of the extension power cord and receiving the extension socket into the main body in a concealed mode while the extension socket is not in use. Also, when the extension socket is required, the extension socket disengages from an accommodating section of the main body and the length of the extension power cord is adjustable with respect to use requirements, thereby enhancing the convenience and comfort of using the extension socket to charge in an exposed mode.

In order to further understand the techniques, means and effects the present invention takes for achieving the prescribed objectives, the following detailed description and included drawings are hereby referred, such that, through which, the purposes, features and aspects of the present invention can be thoroughly and concretely appreciated; however, the included drawings are provided solely for reference and illustration, without any intention to be used for limiting the present invention, whose full scope and dimension is described only in the later following claims.

### BRIEF DESCRIPTION OF THE DRAWINGS

FIG. 1A illustrates an exploded diagram of a first embodiment of the detachable electrical power receptacle in accordance with certain aspects of the present technique in an exposed mode;

FIG. 1B illustrates an exploded diagram of the first embodiment of the detachable electrical power receptacle in accordance with certain aspects of the present technique in a concealed mode;

FIG. 2 illustrates an exploded diagram of a second embodiment of the detachable electrical power receptacle according to the present invention;

FIG. 3 illustrates an exploded diagram of a third embodiment of the detachable electrical power receptacle according to the present invention;

FIG. 4 illustrates an exploded diagram of a fourth embodiment of the detachable electrical power receptacle according to the present invention;

FIG. 5 illustrates a diagram of an embodiment in accordance with the detachable electrical power receptacle according to the present invention in use; and

FIG. 6 illustrates a diagram of another embodiment in accordance with the detachable electrical power receptacle according to the present invention in use.

### DETAILED DESCRIPTION OF THE PREFERRED EMBODIMENTS

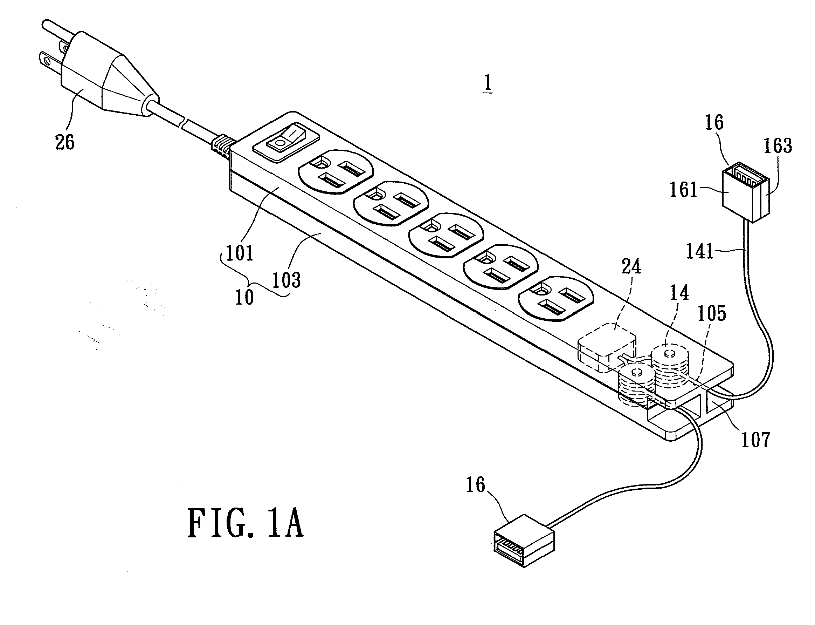

First please refer to FIG 1A, in which an exploded diagram of a first embodiment of the detachable electrical power receptacle in accordance with certain aspects of the present technique in an exposed mode is demonstrated. A detachable electrical power receptacle 1, comprises a main body 10, at least one extension socket 16, at least one extension power cord 141, a coil reel 14, a power unit 24, and an electrical power plug 26. The main body 10 further includes a first housing member 101, a second housing member 103, at least one outlet hole 105, and an accommodating section 107. The extension socket 16, includes a third housing member 161 and a fourth housing member163.

The main body 10 is formed by connecting the first housing member 101 to the second housing member 103. The main body 10 has the electrical power plug 26 which functions by electrically connecting a power supply source and has the outlet hole 105. The outlet hole 105 may be designed to allow the extension power cord 141 wrapped on the coil reel 14 inside the main body to pass through. An end of the extension power cord 141 connects to the main body 10 and the other end thereof connects to the extension socket 16. The extension socket 16 is formed by connecting the third housing member 161 to the fourth housing member. The outlet hole 105 may be disposed on a surface of the first housing member 101 nearby the accommodating section 107. The accommodating section 107 is designed to receive the extension socket 16. It is worth to mention that the existence or the position of the accommodating section 107 is merely for illustration, but is not limited thereto. The main body 10 of the detachable electrical power receptacle 1 may apply the extension power cord 14 to make the extension socket 16 to be disengaged from the main body 10 in a specific distance, i.e., the exposed length of the extension power cord 14, or to be engaged with the main body 10.

It is worth to mention that the coil reel 14 may electrically connect to the power unit 24. The power unit 24 is capable of performing power conversion processing for the electrical power supplying from the power supply source, e.g., the public electrical power distribution system, connected to the electrical power plug 26, so as to output the rectified output power to the extension socket 16. The power unit 14 may connect to the extension power cord 141 electrically. In the embodiment, the connecting relationship is merely for illustration, but is not limited thereto.

The coil reel 14 of the detachable electrical power receptacle 1 according to the present invention is used to wind the extension power cord 141. Therefore, the length of the extension power cord 141 may be varied according to the winding actions of the coil reel 14, so that the extension socket 16 connected to the extension power cord 151 may be tightly engaged with the main body 10 or disengaged or departed from the main body 10, thereby the effective utilization range of the extension socket 16 is adjusted. The winding method of the extension power cord 141 may be an automatically winding method or a manually winding method. In the embodiment, the automatically winding method is taken as an example for illustration, but is not limited thereto. The extension socket 16 may be any different kinds of power connectors as being obvious for the ones skilled in the art, e.g., a universal serial bus (USB) jack or a RJ45, etc.

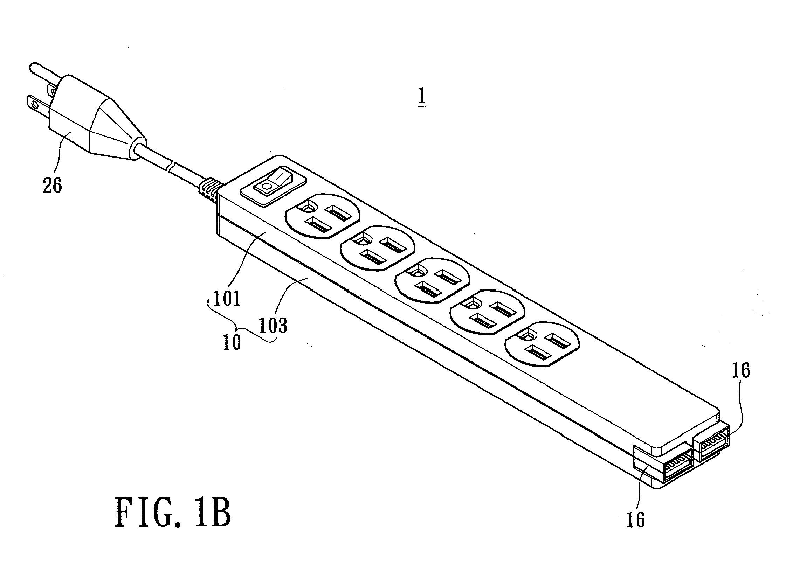

For example, when the extension socket may connect to an electronic device for performing charging operations in a larger and longer range, the exposed length of extension power cord 141 out of the main body may be capable of lengthening, such that the extension socket 16 is disengaged from the accommodating section 107, thereby expanding the utilization range of the extension socket 16 as shown in FIG. 1A. However, when the extension socket is not in use or may connect to an electronic device in a smaller and shorter range, the length of extension power cord 141 may be shortening so as to allow the extension socket 16 to be engaged to the accommodating section 107 of the main body 10, as shown in FIG. 1B. According to the structural design of the embodiment in accordance with certain aspects of the present invention, the users may length or shorten the length of the extension power cord 141, i.e., adjusting effective charging range of the extension socket 16, with respect to different conditions in use, so that the users may not require to perform an additional action, e.g., bending or walking, to utilize the extension socket 16, thereby increasing the convenience in use. Meanwhile, it also prevents the troublesome and inconvenience to carry additional charging connectors and the corresponding extension power cords thereof.

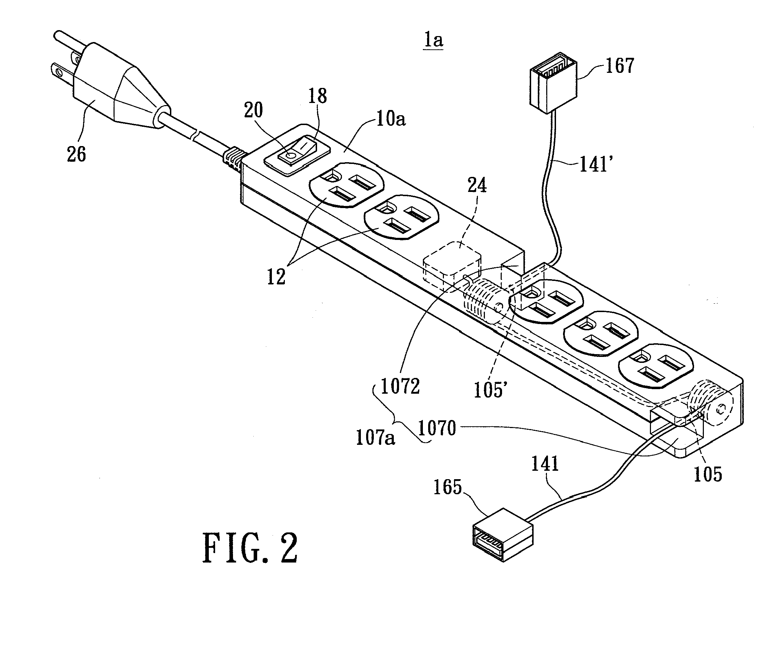

Please refer to FIG. 2 in conjunction with FIG 1A, in which an exploded diagram of a second embodiment of the detachable electrical power receptacle according to the present invention is demonstrated. A detachable electrical power receptacle 1a has identical components and similar connecting relationship with respect to that of FIG.1A and FIG. 1B. The only structural difference, however, is a location design regarding the accommodating section 107a. As shown in FIG. 2, the accommodating section 107a has a first accommodating space 1070 and a second accommodating space 1072. The first accommodating space 1070 is disposed on a periphery of the main body 10a and the second accommodating space 1072 is disposed on a middle section of the main body 10a. Furthermore, an extension power cord 141 passed thru an outlet hole 105 adjacent to the first accommodating space 1070 connects to a first USB (Universal Serial Bus) jack 165; an extension power cord 141' passed thru an outlet hole 105' adjacent to the second accommodating space 1072 connects to a second USB (Universal Serial Bus) jack 167. In the embodiment, the configuration design of the accommodating section 107a and the quantity of the universal serial bus jacks 165, 167 are demonstrated for reference, but not limited thereto.

Moreover, the detachable electrical power receptacle 1a further includes a power switch 18, an indicator 20, and at least one electrical outlet assembly 12. The power switch 18 is disposed on the main body 10a to allow the users to control the electrical power by turning on or off the power switch 18. The indicator 20 may be a light emitting diode (LED) indicator which is disposed on the main body 10a to demonstrate operating information of the detachable electrical power receptacle 1a. If the indicator 20 is emitting light, it means the power supply source is supplying the electrical power and the detachable electrical power receptacle is in a conduction mode; if the indicator 20 is not emitting light, it means the power supply source is not supplying the electrical power to the detachable electrical power receptacle 1a. Thus, the detachable electrical power receptacle 1a is in a cutoff mode. At least one of the electrical outlet assemblies 12 is disposed on the main body 10a. The plurality of electrical outlet assemblies 12 may be either one or a combination of three-slot or two-slot electrical outlets.

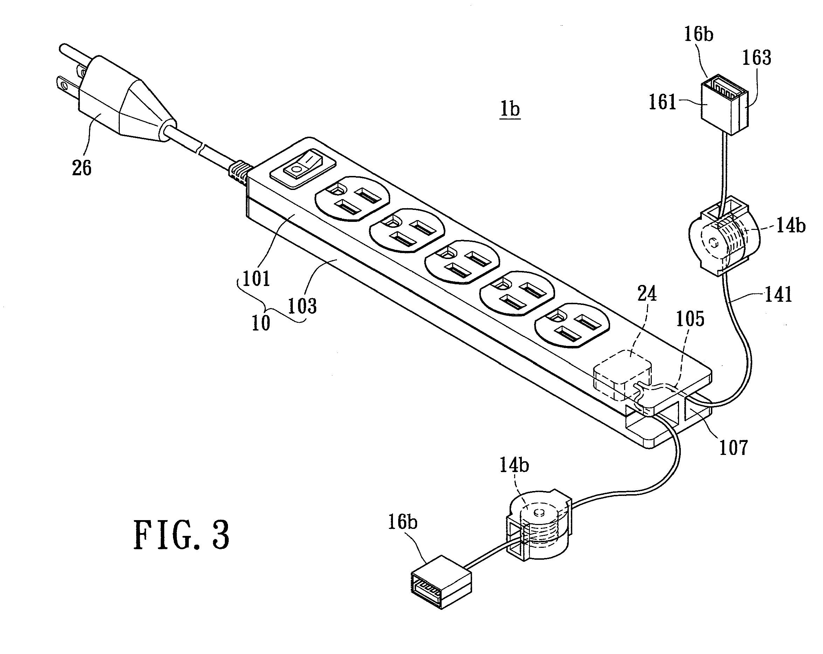

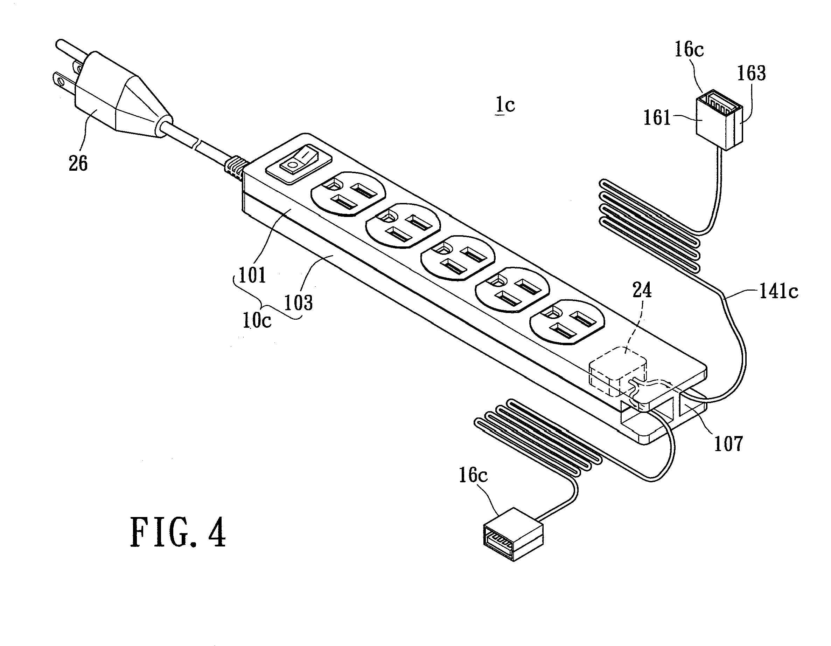

In addition to the foregoing illustrations, please refer to FIG. 3, in which an exploded diagram of a third embodiment of the detachable electrical power receptacle according to the present invention is shown. A detachable electrical power receptacle 1b has identical components and similar connecting relationship with respect to that of FIG.1A. The only structural difference, however, is a location design regarding the coil reel 14b. The coil reel 14b is disposed between the main body 10 and the extension socket 16b. Please refer to the FIG. 4, in which an exploded diagram of a fourth embodiment of the detachable electrical power receptacle according to the present invention is shown. A detachable electrical power receptacle 1c has identical components and similar connecting relationship with respect to that of FIG.1A. The only structural difference, however, is the coil reel 14b is removed and not included as per the present structural design as shown in FIG. 4. As such, the extension power cord 141c, connected to the main body 10c and the extension socket 16c, may be arranged in order outside the main body 10c and the extension socket 16c without depending on any specific tools, i.e., coil reel. The extension power cord 141 c may be winded up, collected, and received in any spaces; conversely, the extension power cord 141c may not be winded up and may be exposed out arbitrarily. The aforementioned embodiments are taken for illustration, but not limited thereto.

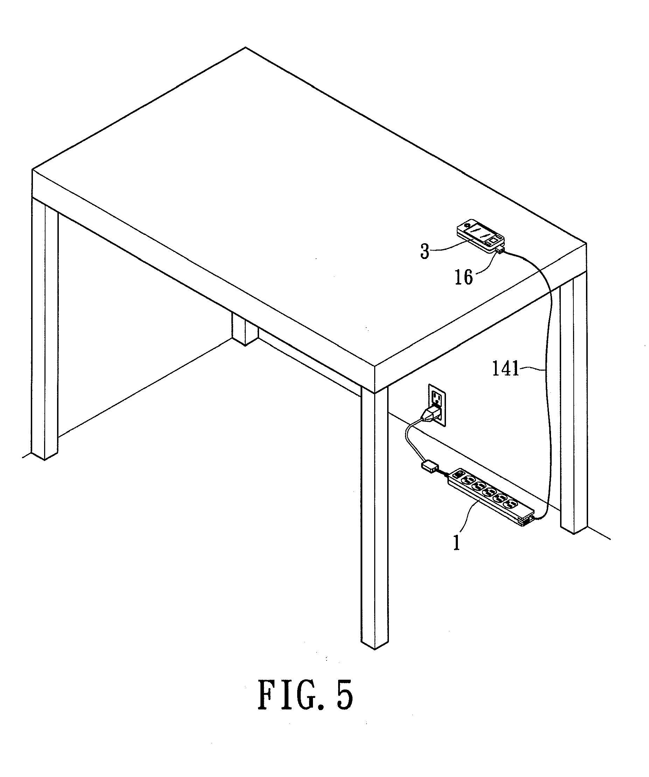

Please refer to FIG. 5 in conjunction with FIG. 1A, in which a diagram of an embodiment in accordance with the detachable electrical power receptacle according to the present invention in use is demonstrated. The extension socket 16 of the detachable electrical power receptacle 1 may be pulled from the ground to the desktop according to the existence of the extension power cord 141, so that the users may apply the extension socket 16 directly to connect to an electronic device 3, e.g., a cell phone or a digital camera, for charging the operations conveniently. Furthermore, the users are not required to bring along other external charging connectors or cords for charging the electronic device 3, thereby increasing the convenience in use. By applying the detachable electrical power receptacle 1, the extension socket 16 may be managed to be engaged or disengaged from the main body so as to improve the convenience in use and expand the charging operation range.

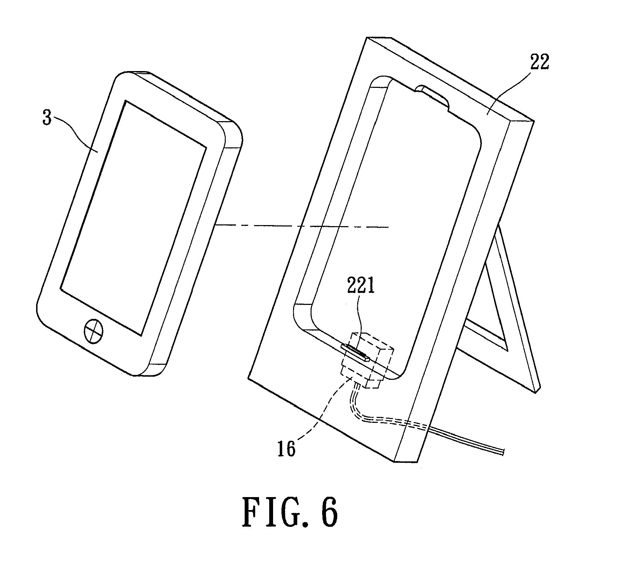

In addition to FIG. 5, please refer to FIG. 6 in conjunction with FIG. 1A, in which a diagram of another embodiment in accordance with the detachable electrical power receptacle according to the present invention in use is demonstrated. The extension socket 16 disengaged from the main body 10 in the exposed mode may cooperate with a binding section 221 which is designed specifically. For example, the binding section 221 may be designed on a charging cradle 22. When the extension socket 16 is disengaged from the main body 10, the binding section 221 is provided for the extension socket 16 to incorporate with the charging cradle 22, so that the charging cradle 22 and the extension socket 16 may function as a unit to facilitate the charging operations of the electronic device 3 on the charging cradle 22. The charging cradle 22 may be formed by a bendable thin plastic sheet or a bendable thick paper, but is not limited thereto. The extension socket 16 may hang on or attach to the binding section 221. The connection methods aforementioned are merely for illustration, but not limited thereto.

In the aspects of the aforementioned embodiments, the detachable electrical power receptacle according which has a simplified structure design with low production cost according to the present invention applies the extension power cord for increasing the convenience in using the extension sockets and the extension power cords to charge the portable electronic device directly. Meanwhile, the technical feature for adjusting the length of the extension power cord is utilized to allow the extension socket to be able to be applied in a larger and wider area. The extension socket may be disengaged from the accommodating section and the length of the extension power cord may be adjusted in the exposed mode, so as to improve the convenience of the charging operations as the extension socket is in use. Alternatively, when the extension socket is not in use, the extension power cord may be winded up to reduce the overall length thereof, so that the extension socket may be received completely in the accommodating section of the detachable electrical power receptacle in the concealed mode. Even though there is no design for the accommodating section, the extension socket may be attached to the outer surface of the main body. By adjusting the length of the extension power cord, the effective area for the charging operations of the extension socket is adjustable, thereby reducing the restrictions and the inconvenience in charging operations.

The aforementioned descriptions represent merely the preferred embodiment of the present invention, without any intention to limit the scope of the present invention thereto. Various equivalent changes, alterations, or modifications based on the claims of present invention are all consequently viewed as being embraced by the scope of the present invention.

## Claims

1. A detachable electrical power receptacle, comprising:
a main body, having an electrical power plug for connecting a power supply source and having at least one electrical outlet assembly;
at least one USB jack; and
at least one extension power cord, electrically connected to the USB jack;
wherein, the extension power cord electrically connects to a power unit which converts a supply power to an output power for outputting to the USB jack, and the main body has an accommodating section for receiving the USB jack.

2. A detachable electrical power receptacle, comprising:
a main body, having an electrical power plug for connecting a power supply source and having at least one electrical outlet assembly;
at least one extension socket; and
at least one extension power cord, electrically connected to the extension socket;
wherein, the extension power cord electrically connects to a power unit which converts a supply power to an output power for outputting to the extension socket, and the main body has an accommodating section for receiving the extension socket.

3. A detachable electrical power receptacle, comprising:
a main body, having an electrical power plug for connecting a power supply source and having at least one electrical outlet assembly;
at least one extension socket; and
at least one extension power cord, connected between the extension socket and the main body;
wherein, the main body outputs an output power to the extension socket by ways of the extension power cord and the extension socket is either disengaged from the main body or engaged to a potion of the main body.

4. The detachable electrical power receptacle according to claim 3, wherein the main body further includes:
a first housing member; and
a second housing member, being coupled to the first housing member to form the main body and disposing an outlet hole on the first housing member or the second housing member.

5. The detachable electrical power receptacle according to claim 3, further including a coil reel, being disposed inside the main body for winding the extension power cord so as to manage a distance between the main body and the extension socket as the extension socket is in an exposed mode.

6. The detachable electrical power receptacle according to claim 3, further including a coil reel, being configured between the extension socket and the main body for winding the extension power cord so as to manage a distance between the main body and the extension socket as the extension socket is in an exposed mode.

7. The detachable electrical power receptacle according to claim 3, wherein the extension power cord is exposed out of the main body and the extension socket.

8. The detachable electrical power receptacle according to claim 3, wherein the extension power cord electrically connects to a power unit which converts a supply power to the output power for outputting to the extension socket.

9. The detachable electrical power receptacle according to claim 3, further including a charging cradle, having a binding section which is coupled to the extension socket.

10. The detachable electrical power receptacle according to claim 7, wherein the charging cradle is formed by a bendable thin plastic sheet or a bendable thick paper.

11. The detachable electrical power receptacle according to claim 3, wherein the main body further includes an accommodating section which is designed for receiving the extension socket.

12. The detachable electrical power receptacle according to claim 3, wherein the main body further includes:
a power switch, for controlling a supply power outputting to the main body; and
an indicator, for representing the power supply source is in a conduction mode or in a cutoff mode.
